# EUROPEAN PATENT SPECIFICATION

(11) **EP 0 336 451 B1**
(45) Date of publication and mention of the grant of the patent: **27.01.1993**
(21) Application number: 89107954.3
(22) Date of filing: 15.01.1986
(51) Int. Cl.: A47J 37/07, A47J 37/06

(54) **Portable gas grill**
Tragbares Gas-Grillgerät
Gril à gaz portatif

(30) Priority: 26.07.1985 US 759531; 08.08.1985 US 763858
(43) Date of publication of application: 11.10.1989
(62) Divisional of application: 86900949.8
(73) Proprietor: WEBER-STEPHEN PRODUCTS CO., Palatine, IL 60067 (US)
(72) Inventor: Lohmeyer, Charles W., Barrington, IL 60010 (US); Stephen, James C., Arlington Heights, IL 60004 (US); Schlosser, Erich J., Lindenhurst, IL 60046 (US); Lejy, Andrzej, No. 204 Palatine, IL 60067 (US); Beecher, John III, Carpentsville, IL 60110 (US); Simkins, Ronald W., Arlington Heights, IL 60004 (US); Pestka, Donald E., Bensenville, IL 60106 (US)
(74) Representative: Strehl Schübel-Hopf Groening & Partner

(56) References cited:
- FR-A- 395 191
- FR-A- 1 180 118
- FR-A- 1 183 734
- US-A- 2 196 280
- US-A- 4 245 505
- US-A- 4 413 515

## Description

The present invention relates to a gas grill including a cart and having a fuel tank supported thereon and an indicating device for indicating the amount of fuel in the tank having a first element fixed to that cart and a second element movable relative to said first element with biasing means, tank-support means for said tank and an indicator arm positioned as a function of the weight of said tank to indicate the amount of fuel in said tank. A gas grill of this type is known from US-A-4 413 515.

FR-A-395 191 shows an apparatus allowing to control the quantity of gas contained in tanks filled with liquified gas. Said tank is supported by pivoting brackets and biased spring. As the tank empties and its weight reduces, it moves vertically. This link-assembly is connected with an indicating means for the quantity of gas in the tank.

It is an object of the present invention to improve the gas grill of the above-mentioned known type in such a manner that a fairly accurate indication of the amount of fuel can be achieved.

To achieve this object the present invention is characterised in that said tank-support means of said second element being provided with means for supporting and suspending the tank consisting of a hook being received into a slot on the upper end of said tank, anti-friction means or rollers on said cart below said elements engageable by said tank to accommodate vertical movement of said tank on said cart, said indicator arm having an inner end pivotally supported on the first element and extending through a slot defined in the second element, the outer end of the indicator arm having a scale associated therewith.

According to one embodiment of the invention that clamp means can be provided for clamping said tank on said hook.

### BRIEF DESCRIPTION OF THE DRAWINGS

Fig. 1 is a perspective view of a gas grill constructed in accordance with the teachings of the present invention;
Fig. 2 is a fragmentary perspective view of the scale which supports the fuel tank;
Fig. 3 is a cross-sectional, as viewed along line 3-3 of Fig. 2;
Fig. 4 is a fragmentary cross-sectional view, as viewed along line 4-4 of Fig. 3.

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

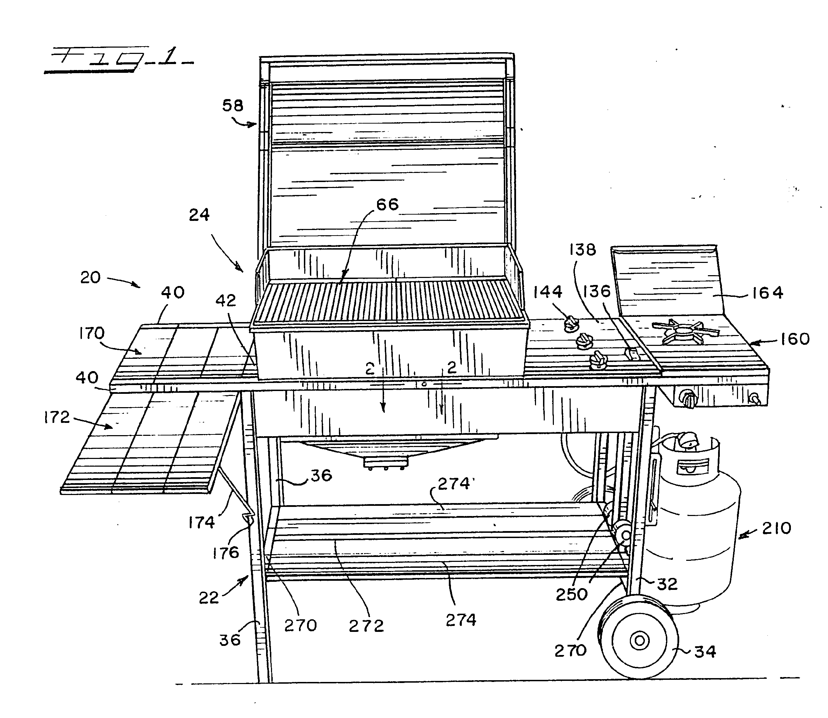

Fig. 1 of the drawings shows a gas grill generally designated by reference numeral 20, constructed in accordance with the teachings of the present invention. The grill 20 consists of a portable cart 22 and a cooking vessel or chamber 24.

The cart 22 is preferably formed from a plurality of hollow rectangular tubular members 30, including a pair of rear vertical posts 32 that define legs supported on wheels 34 at the lower end thereof. The second pair of vertical posts 36 extend upwardly and define the remaining two legs. The upper portion of the cart includes a pair of spaced parallel side memebers 40 which are interconnected by one or more cross-members 42. The side members 40 are defined by at least two end-to-end tubular members 30 that are interconnected in a unique fashion without the use of any special tools or complicated fasteners.

A first burner unit may be ignited by an electric ignitor controlled by a switch 136 that is located on a control panel 138 for all of the burner units. The inner ends of the burner units each having a control valve located between a gas source tube and the end of a burner tube. A control knob 144 extends from the control valve and is located above the control panel.

The gas grill 20 of the present invention incorporates a separate burner unit 160 which is supported on the side members 40 of the cart 22 adjacent one end thereof. The separate burner unit 160 consists of a gas burner 162 that may normally be closed by a cover 164 hinged along one edge to the burner assembly. The separate burner assembly 160 rests on and is suspended between the side members 40 and can easily be moved to a different location if desired. Alternatively, the second burner unit 160 may be eliminated and a work surface may be provided.

The working surface could be of the type shown in Fig. 1 as being a working board 170 that is supported on the side members 40 by brackets adjacent the cooking vessel 24. A further working board 172 may also be provided which is movable between stored and usable positions.

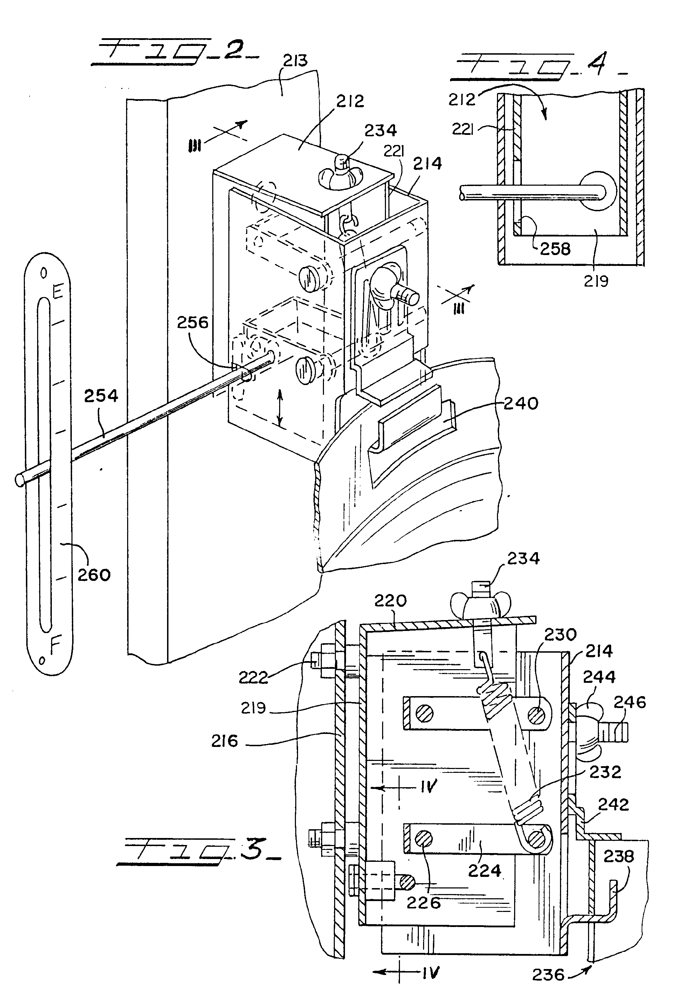

The working board 172 (Fig. 4) is preferably connected along one edge by a hinge to the side member 40 and is supported in the usable position, extending generally horizontally as shown in Fig. 1, by a support rod 174. A support rod 174 is pivotally supported on the lower surface of the board 172 and has an offset outer free end received around the leg 36. The same offset portion may be received in the other leg 36 so that the working board 172 remains in a fixed stored position when not in use. The working board may be formed from a plurality of slats connected by cross-members 176.

The cart 22 (Fig. 1) may also include cross braces 270 and a reinforcing center brace 272 on which removable article-supporting units 274 may be suspended.

The gas grill also incorporates a novel tank-support means for a fuel tank 210, shown in Fig. 1. The details of the tank-support means are shown in Figs. 2 to 4. The tank-support means is located on one end of the cart 22 between the first pair of legs 32 so that the tank is supported directly above the wheels 34. The tank-support means consists of a first element 212 supported on a vertical member 213 that is located between the two legs 32 and a second element 214 which is movable relative to the first element of member 212. The first element generally consists of an U-shaped bracket 220 that has a top wall 221 and is connected by bolts 222 to the brace 213.

The second element 214 is pivotally supported on the first element 212 by a pair of U-shaped members 224 each having one end pivoted on a pin 226. The opposite ends of the support members of bars 224 are pivotally supported on pins 230, which are carried by the second element 214. A biasing spring 232 has one end connected to one of the pins or rods 230 and the opposite end is connected to a threaded coupling 234 carried by the top wall 221 of the first element 212.

The second element 214 also has a tank-support member 236 in the form of a hook 238 that is deformed from the element 214 and extends outwardly. The hook is adapted to be received into a slot 240 formed along the upper edge of the rim of the tank. A slidable clamp element 242 is held onto the element 214 by a wing nut 244 received on a threaded element 246 carried by the second element 214. Thus, the tank can be inserted over the hook and rest on the hook and the clamp can then be used to secure the tank to the movable second element for movement therewith. The support means also consists of a pair of anti-friction means or rollers 250 that are rotatably supported on opposite sides of the vertical brace 213, as is shown in Fig. 1 of the drawings.

The tank-support means also incorporates an indicator arm 254 which has an inner end pivotally supported on the first element 212 and extends through a slot 256 defined in the second element 214. The outer end of the arm or indicator means has a scale 260 associated therewith and the position of the arm 254 with respect to the indicator 260 indicates the amount of fuel remaining within the tank. By proper selection of the spring characteristics of the spring 232, a standard-sized portable tank 210 will give a fairly accurate indication of the amount of fuel within the tank on the gauge 260.

Thus, the tank is supported in cantilevered fashion along the vertical brace 213 and rests or is forced up against the anti-friction means, which allows for better movement and control of the position of the tank through its weight, which is determined by the amount of fuel in the tank.

The spring characteristics are preferably such that the indicator arm remains in the "full" position until about 2/3 of the gas within the tank has been depleted. Thus, a more accurate indication of when the tank approaches complete depletion may be realized.

## Claims

1. A gas grill including a cart (22) and having a fuel tank (210) supported thereon and an indicating device for indicating the amount of fuel in the tank (210) having a first element (212) fixed to that cart (22) and a second element (214) movable relative to said first element (212) with biasing means (232), tank-support means (236) for said tank (210) and an indicator arm (254) positioned as a function of the weight of said tank (210) to indicate the amount of fuel in said tank (210),
characterized in that
said tank-support means (236) of said second element (214) being provided with means for supporting and suspending the tank (210) consisting of a hook (238) being received into a slot (240) on the upper end of said tank (210), anti-friction means or rollers (250) on said cart (22) below said elements (212, 214) engageable by said tank (210) to accommodate vertical movement of said tank (210) on said cart (22), said indicator arm (254) having an inner end pivotally supported on the first element (212) and extending through a slot (256) defined in the second element (214), the outer end of the indicator arm (254) having a scale (260) associated therewith.

2. The gas grill as defined in claim 1 characterized in that clamp means (242) being provided for clamping said tank (210) on said hook (238).

## Patentansprüche

1. Gasgrill mit einem Wagen (22) und mit einem auf diesem angeordneten Brennstofftank (210) und mit einer Anzeigevorrichtung zum Anzeigen des in dem Tank (210) enthaltenen Brennstoffvorrats, mit einem ersten an dem Wagen (22) befestigten Element (212), und einem zweiten beweglich zu dem ersten Element (212) angeordneten Element (214), mit Vorspannmitteln (232), einem Tankhaltemittel (236) für den Tank (210) und einem Anzeigearm (254), der in Abhängigkeit von dem Gewicht des Tanks (210) verstellt wird, um den in dem Tank (210) enthaltenen Brennstoffvorrat anzuzeigen, dadurch gekennzeichnet, daß das Tankhaltemittel (236) des zweiten Elements (214) Mittel zum Lagern und Stützen des Tanks (210) aufweist, die aus einem Haken,(238) bestehen, der in einem Schlitz (240) am oberen Ende des Tanks (210) aufgenommen wird, aus reibungsverringernden Mitteln oder Rollen (250) auf dem Wagen (22) unterhalb der Elemente (212, 214), die mit dem Tank (210) in Eingriff kommen können, um die vertikale Bewegung des Tanks (210) auf dem Wagen (22) zu vereinfachen, wobei der Anzeigearm (254) ein inneres, drehbar auf dem ersten Element (212) gelagertes Ende aufweist und sich durch einen in dem zweiten Element (214) angeordneten Schlitz (256) hindurch erstreckt, und daß dem äußeren Ende des Anzeigearms (254) eine Skala (260) zugeordnet ist.

2. Gasgrill nach Anspruch 1, dadurch gekennzeichnet, daß Klemm-Mittel (242) vorgesehen sind, um den Tank (210) auf dem Haken (238) festzuklemmen.

## Revendications

1. Gril au gaz comprenant un chariot (22) et ayant un réservoir de combustible (210) supporté par celui-ci et un dispositif indicateur pour indiquer la quantité de combustible dans le réservoir (210) ayant un premier élément (212) fixé à ce chariot (22) et un second élément (214) mobile par rapport audit premier élément (212) avec un moyen de tension (232), un moyen support de réservoir (236) pour ledit réservoir (210) et un bras indicateur (254) positionné en fonction du poids dudit réservoir (210) pour indiquer la quantité de combustible dans ledit réservoir (210),
caractérisé en ce que
ledit moyen support de réservoir (236) dudit second élément (214) étant muni d'un moyen pour supporter et suspendre le réservoir (210) comprenant un crochet (238) introduit dans une fente (240) à l'extrémité supérieure dudit réservoir (210), un moyen anti-friction ou rouleaux (250) sur ledit chariot (22) sous lesdits éléments (212, 214) en contact avec ledit réservoir (210) pour faciliter le déplacement vertical dudit réservoir (210) sur ledit chariot (22), ledit bras indicateur (254) ayant une extrémité pivotante interne supportée sur le premier élément (212) et s'étendant à travers une fente (256) définie dans le second élément (214), l'extrémité externe du bras indicateur (254) ayant une échelle (260) associée à celui-ci.

2. Gril au gaz selon la revendication 1
caractérisé en ce que un moyen de blocage (242) étant prévu pour bloquer ledit réservoir (210) sur ledit crochet (238).
